**Europäisches Patentamt**

**European Patent Office**

**Office européen des brevets**

(10)

(11) Publication number: **0 178 812**
**B1**

(12) ## EUROPEAN PATENT SPECIFICATION

(45) Date of publication of patent specification: **09.01.91**

(51) Int. Cl.⁵: **B 32 B 31/04**

(21) Application number: **85306959.9**

(22) Date of filing: **30.09.85**

(54) Adhesive-free laminating methods.

(30) Priority: **19.10.84 US 662570**

(43) Date of publication of application:
**23.04.86 Bulletin 86/17**

(45) Publication of the grant of the patent:
**09.01.91 Bulletin 91/02**

(84) Designated Contracting States:
**AT BE CH DE FR GB IT LI LU NL SE**

(56) References cited:
**US-A-3 660 200**

(73) Proprietor: **BIFLEX DEVELOPMENT PARTNERS LTD.**
**Alder Building Suite 150**
**Grand Rapids Michigan 49503 (US)**

(72) Inventor: **Wyslotsky, Ihor**
**835 North Wood Street**
**Chicago Illinois 60622 (US)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

The present invention relates generally to methods of laminating film materials which are useful, inter alia, as packaging material. More particularly, the present invention relates to a laminating method of producing without separate adhesives a multi-layered packaging laminate.

In the prior art, for many applications, it has been necessary to utilize films having barrier characteristics which are different for the inside of a package as opposed to the outside of the package which is exposed to the atmosphere. In addition, on certain forms of plastic which are desirable for packaging purposes, the exposed surface has been found to be undesirable for printing characteristics. In such instances, it has been necessary to utilize a lamination of two or more plies of polymeric films to form a laminate which is then formed into the packaging material. This has been especially necessary for food products.

In the prior art, in order to formulate such laminated plastic material, it has been necessary to utilize adhesives in between the respective plies or layers of the laminate. Alternatively, it has been necessary for the services of a laminating converter to be utilized. Such a converter purchases the needed films, and forms the needed lamination, frequently on a custom basis, for the package manufacturer. These necessary services have increased the cost of such packaging material, both by reason of the necessity of utilizing adhesives, and also by reason of additional shipping and necessary treatments.

In US-A-3660200 there is disclosed a method of laminating a thermoplastic film with a layer of disimilar substrate material, the substrate being taken from a roll, heated and fed to a pair of nip rolls while the thermoplastic film is supplied from a roll, optionally heated, and fed to the nip rolls to be bonded with the substrate before the laminate is wound on a roll. In view of the aforementioned and other material deficiencies of prior art methods and techniques, it is a material object of the laminating method of the present invention to alleviate such deficiencies.

In accordance with the present invention there is provided a laminating method of producing without separate adhesives a multiple-layered packaging laminate, said method comprising the steps of:

providing a first film which film is less than completely cured;

detackifying the sticky top and bottom surfaces thereof into substantially non-sticky surfaces, with substantial avoidance of curing of the interior of said first film to form a rollable film with non-sticky layers on the surfaces thereof;

rolling said surface detackified first film into a roll;

providing a second film;

unrolling said first film; reconverting at least one of the detackified top and bottom surfaces into a sticky surface of exposed and less than completely cured material of said first film; and laminating said second film to said first film and curing the uncured first film.

The second film may also be detackified and retackified in alternative preferred embodiments.

The film may be preferably detackified by vapor disposition or by cold plasma in an oxidizing atmosphere, or by the deposition of the vapor of a paraffin material, or by vapor of a silicon material in other alternative embodiments. The surface may be substantially retackified — i.e., reconverted to a tacky surface by applying electromagnetic energy, preferably in an inert atmosphere, such as by means of a coronal discharge or by cold plasma techniques.

The methods of the present invention may be better understood in conjunction with the attached drawing, detailed description of preferred embodiments, and the appended claims.

Several examples of the laminating method of the present invention are described herein and the following description is meant to be illustrative, and not limited to the presently preferred embodiments of the present invention. All of the various embodiments in which this invention may be practiced are not described; however, other forms of laminated methods within the scope of the present invention will be suggested thereby to those of ordinary skill in the art.

Brief Description of the Drawing

The description is made in reference to the accompanying drawings, and wherein:

FIG. 1 is a schematic view of the production of a first film of a polymeric material exiting from the extruder and being treated while still only partially cured by a detackifying means to detackify the surface thereof, such that it may be stored upon a roll without sticking;

FIG. 2 depicts a schematic view of the method of the present invention depicting the roll of the detackified first film material, which is then retackified prior to being laminated together with a second film material, the proto-laminate may then be heated to complete the laminate fusing, and finally the laminated material is stored on a further roller for subsequent use; and

FIG. 3 is an enlarged schematic cross-sectional representation of a two-ply laminated film taken along line 3-3 of FIG. 2.

Detailed Description of Preferred Embodiments

The laminating methods of the preset invention produce a multiple-layered packaging laminate from at least two films without the utilization of separate adhesives therebetween. The methods comprise in general the steps of providing a first film which is less than completely cured. The such first film is then detackified at the top and bottom surfaces thereof without any substantial curing of the interior of such first film to permit it thereby to be stored upon a roller without sticking together. Next, the first film is stored upon a roll. Thereafter such film is unrolled, and the detackified surface is retackified on at least one surface thereof. A second film is provided, and the first and second films are laminated together. The first film is preferably cured during such lamination.

The second film may be a film which is also less than completely cured, and in which the surface thereof may be detackified. The second film also is stored on a roll, and the surface thereof may also be retackified in preferred embodiments. Under such embodiments, the second film is then laminated to the first film, and the two films may be preferably heat treated to form such laminate.

The film materials of the present invention are preferably polymeric materials, which may be selected from a wide variety of polymers, including inter alia polyolefins, nylon, polyethylene teraphtalate, polyvinyl chloride, polyurethanes, polystyrenes, poly vinylidene chloride, and other suitable polymers. Polymers containing ethyl acetate on the surface thereof are especially useful, as the ethyl radical created by the plasma techniques is readily connected, linked into a polymer chain of a suitable hydrocarbon creating crosslinking bonding between the two surfaces.

Such films may also contain a sufficient amount of unreacted monomer to render said films substantially stickable to other films by means of producing crosslinking between two surfaces a tacky surface thereon.

In some preferred embodiments, the first film is a thermoplastic material, and may have in these and other embodiments a relatively low melting point.

The surface of such films may be detackified by applying a release or foreign agent thereto. Such release agent may be applied by means of an electrostatic coating or by spraying. Such release agent may be preferably less than 1 micron thick. The release agent may be a paraffin or a silicon material, of such chemical composition that it will readily react with highly re-active particles of ionized gas. Also, such surfaces may be detackified by means of oxidation thereof. Such detackification techniques may be by vapor deposition or by cold plasma techniques. In such instances, the vapor of a paraffin material or a silicon material or others may be deposited.

The surface may be retackified to a substantially tacky surface condition by means of the application of electromagnetic energy thereto, and preferably in the presence of an inert atmosphere. Such electromagnetic energy may be by means of coronal discharge.

Cold plasma techniques, also in such inert atmosphere such as nitrogen, argon, helium, xenon, crypton, neon, or others may be utilized. Retackification is accomplished by two plasma mechanisms:
a) cleaning the surface; and
b) creating free radicals.
The ionized (active) particles of plasma remove the release agent or anti-block agent introduced on the surface of the polymer for detackification and rolling purposes.

Thereafter, the plasma ionization promotes the crosslinking of polymers by creating free radicals.

The radiation knocks off a hydrogen atom from the hydrocarbonic chain, and when such free radical finds another atom that can replace the hydrogen, it links into the chain creating a bond with the other sheet. The free radical then promotes the crosslinking between the two appropriately selected surfaces without the use of any adhesive, fusion, etc.

Apparatus suitable for carrying out of the method of the present invention is preferably a self-contained unit to produce such laminated films, continuously and automatically. Such apparatus may be in preferred embodiments coupled to a packaging line to produce film on demand as the packaging machine requires. When used independently, such laminating machine would preferably be equipped with a rewind stand for laminating rolls. In other embodiments, the apparatus of the present invention may function as add-on equipment with an existing packaging line or independently as a self-standing film laminator.

In regard to the films for use in the present methods, the sheets may be either clear or pigmented, random or registered printed, or in other embodiments metalized polymeric materials. The barrier characteristics of the materials can vary from very low barrier structures, through materials displaying very high barrier characteristics, such as those displayed by metalized Saran and Barex, and foam or expanded structures.

The high barrier materials produced according to the methods of the present invention may be used for packaging perishable foods, drugs or other products that require high degrees of isolation of the packaged product from the environment. Also, the materials that are used in the laminating invention of the present invention in preferred embodiments have the required FDA and USDA approvals for those products which are to be used to package food, drug or cosmetic products. The inks utilized for decorating and labeling purposes may be contained between the two film plies in preferred embodiments, which would greatly reduce the need for special surface treatment of the laminate and also for special inks for that purpose. Also, the ink locked between the two plies of the lamination will enhance the appearance and durability of the packaging.

When utilized in conjunction with a packaging line the apparatus for carrying out the laminating methods of the present invention should be preferably equipped with an electronic print register system, as are known in the art. Such a system is designed to produce a pre-printed semi-rigid sheet which is fed to register with a thermoforming unit or other package forming machine.

Such apparatus for carrying out the methods of the present invention includes at least elements for unwinding the film, treating the film surface, laminating the two films, and a rewind stand for rewinding the laminate. An unwind stand is also provided to accomodate two rolls of film.

In certain preferred embodiments, three plies may be laminated together, such as for packaging bulk product, and which will be especially useful for packaging bulk product for institutional use. In certain applications, all three plies are designed to withstand temperatures for cooking food in the package. The utilization of high temperature film will permit the foods to be cooked inside the container. This will also insure sterility of contents of the package. As a result, the product packaged in such a package can be expected to remain fresh over a long period of time without the need for refrigerator storage. The economic impact is that great savings may be obtained by the users of such methods of the present invention.

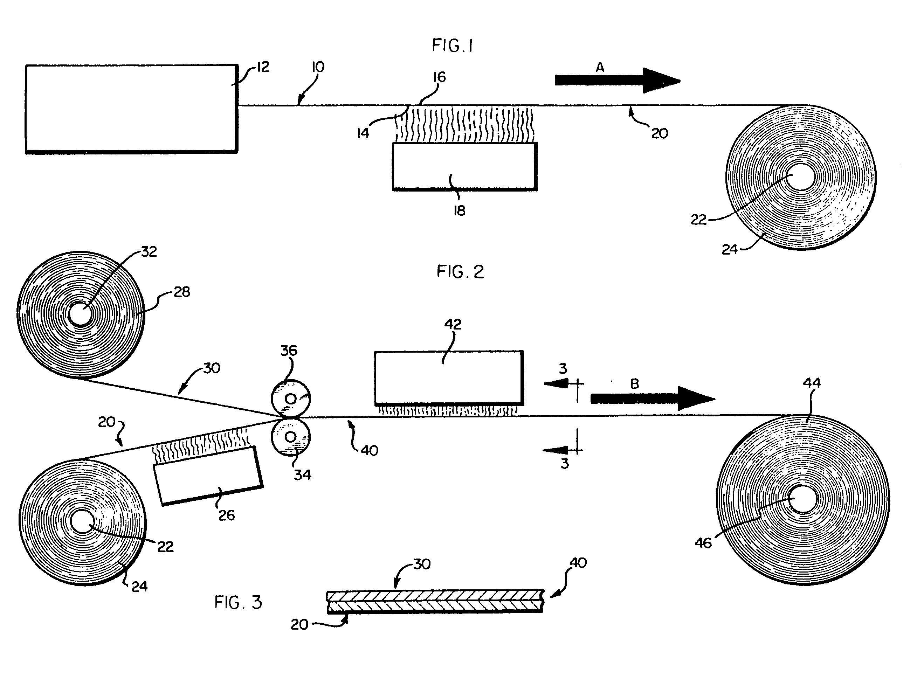

Referring now to the drawing, and to Fig. 1 in particular, a first plastic film generally 10 is formed from an extruder 12 in a less than completely cured state. Such first film 10 from extruder 12 may be treated, preferably at both surfaces 14, 16 thereof, by detackifying treatment means 18, such as a vapor depositor or coronal discharge unit or by other means to detackify the surface. The treated film generally 20 is then wound in the direction of arrow A onto a winding first film roller 22 to form a roll 24 of detackified film.

With respect to Fig. 2, the roll 24 of the detackified first film 20 is unwound and passed over a retackifying element 26, which may be by coronal discharge or cold plasma treatment. An inert atmosphere may preferably be provided therefor. At the same time, a second roll 28 of a different polymeric material generally 30 is unwound from a second film roller 32, and the first and second rolls 24, 28 are passed through nip roller 34, 36 pressing the two films 20, 30 together to form a laminate generally 40. Such nip rollers 34, 36 may be heated. In alternative preferred embodiments, a heating element 42 may be provided to further cure any uncured portion of the first and second films 20, 30 and/or to assist in the bonding function of the laminate 40 of first and second films 20, 30 as shown in Fig. 3. The laminated and/or heated film 40 is then wound in the direction of arrow B to form a roll 44 of laminate 40 on storage roller 46.

**Claims**

1. A laminating method of producing without separate adhesives a multiple-layered packaging laminate, said method comprising the steps of:
   providing a first film which film is less than completely cured;
   detackifying the sticky top and bottom surfaces thereof into substantially non-sticky surfaces, with substantial avoidance of curing of the interior of said first film to form a rollable film with non-sticky layers on the surfaces thereof;
   rolling said surface detackified first film into a roll;
   providing a second film;
   unrolling said first film; reconverting at least one of the detackified top and bottom surfaces into a sticky surface of exposed and less than completely cured material of said first film; and laminating said second film to said first film and curing the uncured first film.

2. The laminating method of claim 1 wherein said uncured first film is cured during lamination with said second film.

3. The laminating method of claim 1 wherein said second film is also less than completely cured and the top and bottom surfaces of which are detackified to form a non-sticking surface, said second film is rolled, and said second film is later unrolled, and at least one of said detackified surfaces is reconverted to a tacky surface prior to lamination with said first film.

4. The laminating method of claim 1 wherein at least one of said films is a polymeric material.

5. The laminating method of claim 3 wherein said film contains a sufficient substantial portion of unreacted said film monomer to render said film substantially stickable to other films.

6. The laminating method of claim 1 wherein said first film is a thermoplastic material.

7. The laminating method of claim 6 wherein said thermoplastic material has a relatively low melting point.

8. The laminating method of claim 4 wherein said film contains a sufficient amount of solvent to render said film substantially stickable to other films.

9. The laminating method of claim 1 wherein said detackifying of said top and bottom surfaces of said first film is accomplished by applying a release agent thereto.

10. The laminating method of claim 9 wherein said release agent is applied by electrostatic coating.

11. The laminating method of claim 9 wherein said release agent is applied by spraying.

12. The laminating method of claim 9 wherein said release agent is applied less than 500 microns thick.

13. The laminating method of claim 9 wherein said release agent is a paraffin.

14. The laminating method of claim 9 wherein said release agent is a silicon.

15. The laminating method of claim 1 wherein said top and bottom surfaces of said first film are detackified by oxidization thereof.

16. The laminating method of claim 1 wherein said top and bottom surfaces of said first film are detackified by vapor deposition.

17. The laminating method of claim 16 wherein said vapor deposition is applied by means of cold plasma.

18. The laminating method of claim 16 wherein a vapor of a paraffin material is deposited on said top and bottom surfaces of said first film.

19. The laminating method of claim 16 wherein a vapor of a silicon material is deposited on said top and bottom surfaces of said first film.

20. The laminating method of claim 1 wherein said surface is reconverted to a substantially tacky surface by applying electromagnetic energy thereto.

21. The laminating method of claim 20 wherein said retackifying electromagnetic energy is applied in a substantially inert atmosphere.

22. The laminating method of claim 20 wherein said electromagnetic energy is coronal discharge.

23. The laminating method of claim 1 wherein surface is reconverted by applying cold plasma thereto.

## Patentansprüche

1. Laminierverfahren zum Herstellen eines mehrlagigen Verpackungslaminats ohne gesonderte Klebstoffe, enthaltend die folgenden Schritte:
Bereitstellen eines ersten Films, der nicht vollständig ausgehärtet ist;
Entfernen der Klebkraft von den klebrigen Ober- und Unterseiten desselben zur Bildung im wesentlichen nicht-klebriger Oberflächen unter wesentlicher Vermeidung einer Aushärtung des Innern des ersten Films zur Bildung eines aufrollbaren Films mit nicht-klebrigen Schichten an den Oberflächen desselben;
Aufrollen des an den Oberflächen klebfreien ersten Films zu einer Rolle;
Bereitstellen eines zweiten Films;
Entrollen des ersten Films;
erneutes Umwandeln wenigstens einer der klebfreien Ober- und Unterseiten in eine klebrige Oberfläche von freigelegtem und nicht vollständig gehärtetem Material des ersten Films; und Laminieren des zweiten Films auf den ersten Film und Aushärten des nicht ausgehärteten ersten Films.

2. Laminierverfahren nach Anspruch 1, bei dem der nicht ausgehärtete erste Film während der Beschichtung mit dem zweiten Film ausgehärtet wird.

3. Laminierverfahren nach Anspruch 1, bei dem der zweite Film ebenfalls nicht vollständig ausgehärtet ist und die Ober- und Unterseiten desselben klebfrei gemacht worden sind, um eine nichtklebende Oberfläche zu bilden, der zweite Film aufgerollt wird und der zweite Film später abgerollt wird und wenigstens eine der klebfrei gemachten Oberflächen wieder in eine klebrige Oberfläche umgewandelt wird, bevor der Film mit dem ersten Film laminiert wird.

4. Laminierverfahren nach Anspruch 1, bei dem wenigstens einer der Filme ein Polymermaterial ist.

5. Laminierverfahren nach Anspruch 3, bei dem der Film einen ausreichend wesentlichen Anteil unreagierten Filmmonomers enthält, um den Film an andere Filme im wesentlichen anklebbar zu machen.

6. Laminierverfahren nach Anspruch 1, bei dem der erste Film ein thermoplastisches Material ist.

7. Laminierverfahren nach Anspruch 6, bei dem das thermoplastische Material einen relativ niedrigen Schmelzpunkt hat.

8. Laminierverfahren nach Anspruch 4, bei dem der Film einen ausreichenden Anteil an Lösungsmittel enthält, um den Film an andere Filme im wesentlichen anklebbar zu machen.

9. Laminierverfahren nach Anspruch 1, bei dem das Klebfreimachen der Ober- und Unterseiten des ersten Films durch Aufbringung eines Freigabemittels auf diesen ausgeführt wird.

10. Laminierverfahren nach Anspruch 9, bei dem das Freigabemittel durch elektrostatische Beschichtung aufgebracht wird.

11. Laminierverfahren nach Anspruch 9, bei dem das Freigabemittel durch Sprühen aufgebracht wird.

12. Laminierverfahren nach Anspruch 9, bei dem das Freigabemittel mit weniger als 500 µm Dicke aufgebracht wird.

13. Laminierverfahren nach Anspruch 9, bei dem das Freigabemittel Paraffin ist.

14. Laminierverfahren nach Anspruch 9, bei dem das Freigabemittel ein Silicon ist.

15. Laminierverfahren nach Anspruch 1, bei dem die Ober- und Unterseiten des ersten Films durch Oxidation desselben klebfrei gemacht werden.

16. Laminierverfahren nach Anspruch 1, bei dem die Ober- und Unterseiten des ersten Films durch Dampfabscheidung klebfrei gemacht werden.

17. Laminierverfahren nach Anspruch 16, bei dem die Dampfabscheidung mittels eines kalten Plasmas durchgeführt wird.

18. Laminierverfahren nach Anspruch 16, bei dem ein Dampf aus einem Paraffinmaterial auf den Ober- und Unterseiten des ersten Films niedergeschlagen wird.

19. Laminierverfahren nach Anspruch 16, bei dem ein Dampf aus einem Siliconmaterial auf den Ober- und Unterseiten des ersten Films niedergeschlagen wird.

20. Laminierverfahren nach Anspruch 1, bei dem die genannte Oberfläche in einen im wesentlichen klebrigen Zustand durch Aufbringen von elektromagnetischer Energie auf sie rückgewandelt wird.

21. Laminierverfahren nach Anspruch 20, bei dem die die Klebkraft wieder hervorrufende, elektromagnetische Energie in einer im wesentlichen inerten Atmosphäre zugeführt wird.

22. Laminierverfahren nach Anspruch 20, bei dem die elektromagnetische Energie eine Coronaentladung ist.

23. Laminierverfahren nach Anspruch 1, bei dem die Oberfläche durch Zuführen eines kalten Plasmas zu ihr rückgewandelt wird.

## Revendications

1. Procédé de stratification pour produire un stratifié d'emballage multicouche sans adhésifs séparés, ledit procédé comprenant les étapes qui consistent à:
fournir un premier film, lequel film n'est pas complètement cuit;
transformer les surfaces supérieure et inférieure collantes de celui-ci en des surfaces sensiblement non collantes, en évitant sensiblement de cuire l'intérieur dudit premier film pour former un film enroulable avec des couches non collantes sur ses surfaces;

enrouler ledit premier film à surfaces rendues non collantes en un rouleau;

fournir un second film;

dérouler ledit second film, retransformer au moins l'une des surfaces supérieure et inférieure rendues non collantes en une surface collante de matière exposée et non complètement cuite dudit premier film, et stratifier ledit second film sur ledit premier film, et cuire le premier film non cuit.

2. Procédé de statification selon la revendication 1, dans lequel ledit premier film non cuit est cuit pendant la stratification avec ledit second film.

3. Procédé de statification selon la revendication 1, dans lequel ledit second film est également non complètement cuit et ses surfaces supérieure et inférieure sont rendues non collantes pour former une surface non collante, ledit second film est enroulé, et ledit second film est ensuite déroulé, et au moins l'une desdites surfaces rendues non collantes est retransformée en une surface collante avant la stratification avec ledit premier film.

4. Procédé de stratification selon la revendication 1, dans lequel au moins l'un desdits films est une matière polymère.

5. Procédé de stratification selon la revendication 3, dans lequel ledit film contient une partie sensible de monomère dudit film qui n'a pas réagi, suffisante pour rendre ledit film sensiblement susceptible de coller à d'autres films.

6. Procédé de stratification selon la revendication 1, dans lequel ledit premier film est une matière thermoplastique.

7. Procédé de stratification selon la revendication 6, dans lequel ladite matière thermoplastique a un point de fusion relativement bas.

8. Procédé de stratification selon la revendication 4, dans lequel ledit film contient une quantité suffisante de solvant pour rendre ledit film sensiblement susceptible de coller à d'autres films.

9. Procédé de stratification selon la revendication 1, dans lequel ladite opération pour rendre non collantes lesdites surfaces supérieure et inférieure dudit premier film est réalisée en leur applicant un agent de séparation.

10. Procédé de stratification selon la revendication 9, dans lequel ledit agent de séparation est appliqué par revêtement électrostatique.

11. Procédé de stratification selon la revendication 9, dans lequel ledit agent de séparation est appliqué par pulvérisation.

12. Procédé de stratification selon la revendication 9, dans lequel ledit agent de séparation est appliqué sur une épaisseur inférieure à 500 µm.

13. Procédé de stratification selon la revendication 9, dans lequel ledit agent de séparation est une paraffine.

14. Procédé de stratification selon la revendication 9, dans lequel ledit agent de séparation est une silicone.

15. Procédé de stratification selon la revendication 1, dans lequel lesdites surfaces supérieure et inférieure dudit premier film sont rendues non collantes par oxydation.

16. Procédé de stratification selon la revendication 1, dans lequel lesdites surfaces supérieure et inférieure dudit premier film sont rendues non collantes par condensation de vapeur.

17. Procédé de stratification selon la revendication 16, dans lequel ladite condensation de vapeur est appliquée au moyen d'un plasma froid.

18. Procédé de stratification selon la revendication 16, dans lequel une vapeur d'une matière paraffinique est condensée sur lesdites surfaces supérieure et inférieure dudit premier film.

19. Procédé de stratification selon la revendication 16, dans lequel une vapeur d'une matière à base de silicone est condensée sur lesdites surfaces supérieure et inférieure dudit premier film.

20. Procédé de stratification selon la revendication 1, dans lequel ladite surface est retransformée en une surface sensiblement collante par application d'une énergie électromagnétique.

21. Procédé de stratification selon la revendication 20, dans lequel ladite énergie électromagnétique pour redonner un caractère collant est appliquée dans une atmosphère sensiblement inerte.

22. Procédé de stratification selon la revendication 20, dans lequel ladite énergie électromagnétique est une décharge corona.

23. Procédé de stratification selon la revendication 1, dans lequel une surface est retransformée par application d'un plasma froid.

EP 0 178 812 B1

FIG. I

A

12

10

16

14

20

18

22

24

FIG. 2

32

28

42

30

36

3

B

44

20

34

40

3

26

22

46

24

30

40

FIG. 3

20